# EUROPÄISCHE PATENTSCHRIFT

(11) **EP 1 199 208 B1**
(45) Veröffentlichungstag und Bekanntmachung des Hinweises auf die Patenterteilung: **18.06.2003**
(21) Anmeldenummer: 01122837.6
(22) Anmeldetag: 22.09.2001
(51) Int. Cl.: B60K 15/04

(54) **Kraftfahrzeug-Kraftstofftank mit einem Einfüllstutzen zur Aufnahme einer Zapfpistole für Dieselkraftstoff**
Vehicle fuel tank with inlet for receiving a pump nozzle for diesel fuel
Reservoir de carburant de véhicule avec un embout pour recevoir un pistolet de remplissage de gazole

(30) Priorität: 19.10.2000 DE 10051847
(43) Veröffentlichungstag der Anmeldung: 24.04.2002
(73) Patentinhaber: Bayerische Motoren Werke Aktiengesellschaft, 80809 München (DE)
(72) Erfinder: Neubert, Reimund, 80995 München (DE)

(56) Entgegenhaltungen:
- FR-A- 2 741 014
- US-A- 3 730 216
- US-A- 5 960 839

## Beschreibung

Die Erfindung betrifft einen Kraftfahrzeug-Kraftstofftank mit einem Einfüllstutzen, der hinsichtlich seiner Abmessung zur Aufnahme einer einen größeren Durchmesser aufweisenden Tank-Zapfpistole, insbesondere einer Zapfpistole für Dieselkraftstoff, vorgesehen ist, mit einem am Einfüllstutzen vorgesehenen Element, welches auf das Einführen einer Tank-Zapfpistole mit dem besagten größeren Durchmesser anspricht und daraufhin ein Befüllen des Kraftstofftanks zulässt, während bei Einführen einer Tank-Zapfpistole mit einem kleineren Durchmesser in den Einfüllstutzen ein Befüllen des Kraftstofftanks verhindert wird. Zum technischen Umfeld wird beispielshalber auf die FR-A-2741014 verwiesen.

Mit der Markteinführung von Bleifrei-Kraftstoffen für Ottomotoren wurden die bis dahin für sämtliche Kraftstoffsorten einen einheitlichen Durchmesser ausweisenden Tank-Zapfpistolen (jedenfalls solche für Personenkraftwagen) für diesen neuen Kraftstoff im Durchmesser reduziert. Durch einen sog. Restriktor mit einer sog. Bleifrei-Klappe im Einfüllrohr von Kfz.-Kraftstofftanks war und ist es somit nicht möglich, bleihaltigen Otto-Kraftstoff oder Diesel-Kraftstoff (die an den Tankstellen hierfür vorhandenen Zapfpistolen besitzen den gleichen, gegenüber den Zapfpistolen für Bleifrei-Kraftstoff größeren Durchmesser) in den Kraftstofftank eines Kfz.'s einzufüllen, das für Betrieb mit Bleifrei-Kraftstoffen vorgesehen ist. Auf diese Weise ist der an diesen Fahrzeugen vorhandene Abgaskatalysator sicher vor einer Zerstörung, hervorgerufen durch Falschbetankung mit bleihaltigem Kraftstoff, geschützt.

Weiterhin ist es jedoch möglich, dass versehentlich bleifreier Otto-Kraftstoff (Benzin) in den Tank eines Kfz.'s eingefüllt wird, welches mit Dieselkraftstoff betrieben wird. Wird dann einem Dieselmotor reiner Ottokraftstoff zugeführt, so kann dies zu erheblichen Schäden führen. Allenfalls ein geringer Anteil von Ottokraftstoff bzw. Benzin in einer relativ großen Menge von Dieselkraftstoff kann toleriert werden (und wurde bzw. wird teilweise im Winter beigemengt, um den Kaltstart zu erleichtern), einen höheren Benzinanteil in einem Diesel-Benzin-Kraftstoffgemisch gilt es jedoch unbedingt zu vermeiden.

Aus der eingangs genannten FR-A-2741014 ist ein Kraftfahrzeug-Kraftstofftank bekannt, bei dem am bzw. im Einfüllstutzen sog. Klauen vorgesehen sind, die in ihrer Ruhestellung zunächst verhindern, dass eine Tank-Zapfpistole ausreichend weit in den Einfüllstutzen eingeführt werden kann, um danach aus der Zapfpistole Kraftstoff in den Tank füllen zu können. Die diese sog. Klauen tragenden Arme weisen dabei in den Einfüllstutzen hineinragende Vorsprünge auf, die derart dimensioniert sind, dass mit Einführen einer Zapfpistole mit größerem Durchmesser die besagten Klauen aus dem Einfüllstutzen hinausgeschwenkt werden, so dass dann diese Zapfpistole vollständig bzw. ausreichend weit in den Einfüllstutzen eingeführt werden kann. Wird hingegen versucht, eine Zapfpistole mit kleinerem Durchmesser in den Einfüllstutzen einzuführen, so passiert diese zunächst die genannten Vorsprünge, ohne dass hierbei die Klauen aus dem Einfüllstutzen herausgeschwenkt werden, so dass letztere ein weiteres Einführen der Zapfpistole behindern.

Grundsätzlich erscheint diese bekannte Lösung zum Verhindern einer Falschbetankung ausführbar, jedoch bereitet eine tatsächliche Umsetzung erhebliche Schwierigkeiten. So müssen an einem Einfüllstutzen üblicher Länge die besagten Klauen durch die Wand des Einfüllstutzens hindurch ragen, was erhebliche Abdichtprobleme hervorruft. Auch ist die geschilderte Ver-Verschwenkbewegung unter realen Abmessungen kaum mit ausreichender Sicherheit erreichbar. Femer ist es bei diesem bekannten Stand der Technik praktisch nicht möglich, aus einer Zapfpistole mit kleinerem Durchmesser eine geringe Menge von damit abgegebenem bleifreiem Otto-Kraftstoff in einen Diesel-Kraftstofftank einzuführen.

Insbesondere im Hinblick auf die im vorhergehenden Absatz erstgenannte Problematik eine Abhilfemaßnahme aufzuzeigen, ist Aufgabe der vorliegenden Erfindung.
Die Lösung dieser Aufgabe ist dadurch gekennzeichnet, dass am Kraftstofftank, der mit einer Befüll-Entlüftungseinrichtung in Form einer größtenteils getrennt vom Einfüllstutzen verlaufenden Entlüftungsleitung ausgebildet ist, das Befüllen des Kraftstofftanks bei Einführen einer Tank-Zapfpistole mit einem kleineren Durchmesser dadurch verhindert wird, dass dann die Entlüftungsleitung des Kraftstofftanks verschlossen ist.

Das (vollständige) Befüllen des Kraftstofftanks bei Einführen einer Tank-Zapfpistole mit einem kleineren Durchmesser (nämlich insbesondere einer Zapfpistole für bleifreies Benzin) wird also dadurch verhindert, dass dann eine Befüll-Entlüftungseinrichtung des Kraftstofftanks verschlossen ist. Bei Einführen einer Zapfpistole mit dem "richtigen", d.h. mit dem besagten größeren Durchmesser (nämlich insbesondere einer Diesel-Zapfpistole) hingegen ist oder wird dann die Befüll-Entlüftungseinrichtung geöffnet. Vorteilhafte Weiterbildungen sind Inhalt der Unteransprüche.

Erfindungsgemäß wird direkt am Einfüllstutzen und somit am direkt von der Tankstellen- bzw. Zapfsäulen-Zapfpistole betroffenen Element des Kraftfahrzeugs überprüft, ob die richtige Zapfpistole, nämlich eine solche mit größerem Durchmesser, eingeführt wurde. Dabei erfolgt diese Überprüfung selbsttätig und veranlasst auch gleich die jeweils erforderliche Maßnahme, indem bejahendenfalls das Betanken ermöglicht und verneinendenfalls das Betanken verhindert wird. Hierfür ist am Einfüllstutzen (analog dem bekannten Stand der Technik) ein geeignetes, diese Funktionen ausübendes Element vorgesehen. Einfach und äußerst zuverlässig kann die vorgeschlagene Lösung, die keine Umrüstung der bestehenden Tankanlagen, d.h. insbesondere Zapfpistolen, erforderlich macht, umgesetzt werden, wenn das besagte Element auf die an jedem Kfz.-Kraftstofftank vorhandene Befüll-Entlüftungseinrichtung zugreift.

Bekanntermaßen wird über eine Befüll-Entlüftungseinrichtung die Gasmenge, die von der in den Kraftstofftank eingefüllten Kraftstoffmenge verdrängt wird, nach außen abgeführt. Zumeist werden mit dieser verdrängten Gasmenge auch die sich beim Befüllen des Kraftstofftanks in diesem unvermeidlich bildenden Kraftstoffdämpfe insbesondere zur Zapfpistole hin abgeführt, wo sie abgesaugt bzw. in den Tankstellen-Vorratstank rezirkuliert werden. Ist jedoch diese Befüll-Entlüftungseinrichtung bzw. eine entsprechende Entlüftungsleitung beim Befüllen des Tankes verschlossen, so wird im Kraftstofftank und somit auch im Einfüllstutzen desselben ein Überdruck aufgebaut, nachdem die vom eingefüllten Kraftstoff verdrängte Gasmenge (sowie sich bildende Kraftstoffdämpfe) nicht abgeführt werden kann. Dieser Überdruck verursacht einen Rückstau im Einfüllstutzen, wodurch - wie üblich - die Abschaltautomatik an der Zapfpistole aktiviert und somit das Befüllen des Kraftstofftanks abgebrochen, d.h. ein weiteres Befüllen des Kraftstofftanks verhindert wird.

Aus diesen Erläuterungen geht hervor, dass es mit dieser Ausführung zwar grundsätzlich möglich ist, eine "falsche" Zapfpistole mit dem besagten kleineren Durchmesser in den Einfüllstutzen einzuführen und dann auch eine geringe Menge von "falschem" Kraftstoff (vorteilhafterweise) in den Kraftstofftank einzufüllen, jedoch wird nach dieser geringen Menge ein weiteres Betanken mit dem falschen Kraftstoff (insbesondere mit Bleifrei-Benzin) einfach und sicher verhindert. Danach kann ungehindert der Kraftstofftank mit der "richtigen" Zapfpistole mit besagtem größeren Durchmesser und somit insbesondere mit Diesel-Kraftstoff vollständig befüllt werden. Dann befindet sich zwar eine geringe Menge von Otto-Kraftstoff (Bleifrei-Benzin) im Kraftstofftank, jedoch ist eine solche geringe Menge, wie einleitend bereits ausgeführt wurde, unproblematisch.

Besonders einfach umgesetzt werden können die soweit beschriebenen Maßnahmen, wenn das besagte, am Einfüllstutzen vorgesehene Element bei Einführen einer Tank-Zapfpistole mit dem besagten größeren Durchmesser in den Einfüllstutzen von einer eine Mündungsöffnung der größtenteils getrennt vom Einfüllstutzen verlaufenden und mit ihrem äußeren Ende in diesen hinein mündenden Entlüftungsleitung verschließenden Position in eine diese Mündungsöffnung freigebende Position bewegt wird. Befindet sich dann keine Zapfpistole im Einfüllstutzen, so ist diese Befüll-Entlüftungseinrichtung bzw. Entlüftungsleitung vorteilhafterweise verschlossen. Nur bei Einführen einer "richtigen" Zapfpistole kann diese dann geöffnet und daraufhin eine größere Menge von Kraftstoff in den Tank eingefüllt werden.

Ein bevorzugtes Ausführungsbeispiel der Erfindung, bei welchem das besagte Element, welches auf das Einführen einer Tank-Zapfpistole mit dem "richtigen" Durchmesser anspricht, als hohlzylindrisches Schieber-Element ausgeführt und gegen Federkraft im Einfüllstutzen längsverschiebbar geführt ist, ist in den beigefügten Figuren dargestellt und wird im folgenden näher beschrieben. Dabei zeigt **Figur 1** einen Kraftstofftank mit einem Einfüllstutzen und "richtiger" Zapfpistole, was in **Figur 2** vergrößert (ohne den Tank) dargestellt ist, während sich bei **Figur 3** eine "falsche" Zapfpistole im Einfüllstutzen befindet. Stets sind dabei gleiche Bauelemente mit den gleichen Bezugsziffern versehen.

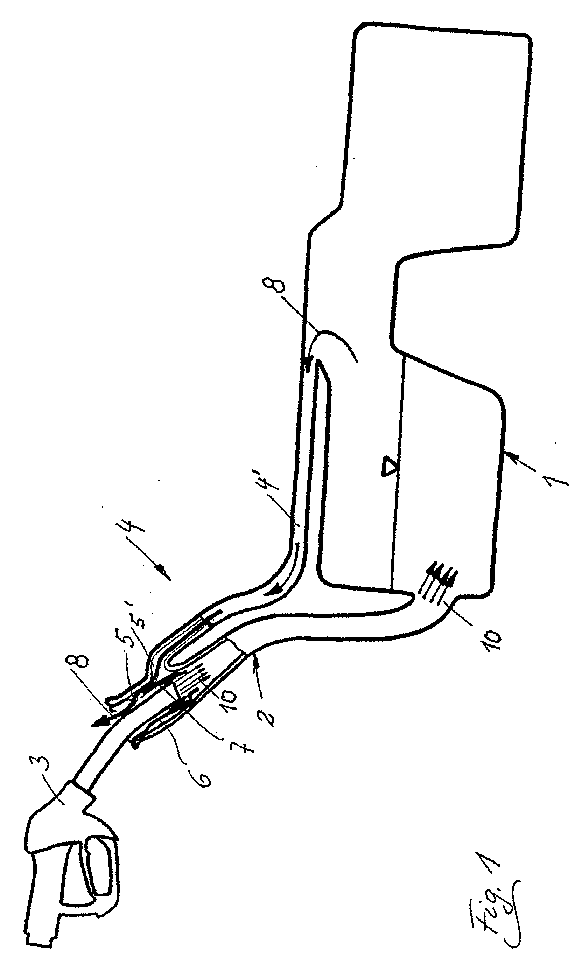

Bezugnehmend auf zunächst **Figur 1** ist mit der Bezugsziffer 1 der Kraftstofftank eines Personenkraftwagens bezeichnet, der - wie üblich - einen Einfüllstutzen 2 aufweist, über den aus bzw. mittels einer üblichen Tank-Zapfpistole 3, die mit einer nicht dargestellten Tankstellen-Zapfsäule verbunden ist, Kraftstoff in den Kraftstofftank 1 eingefüllt werden kann. Am Kraftstofftank 1 vorgesehen ist eine - im wesentlichen übliche - Befüll-Entlüftungsleitung 4', die von der höchsten Stelle des Tank-Innenraumes abzweigt und die nahe des freien Endes des Einfüllstutzens 2 über eine Mündungsöffnung 5 in diesem mündet. Über diese Befüll-Entlüftungsleitung 4' können somit gemäß den Pfeilen 8 Gase, die beim Befüllen des Kraftstofftanks 1 mit Kraftstoff aus diesem verdrängt werden, abgeführt werden, so dass die Befüll-Entlüftungsleitung 4' zusammen mit der Mündungsöffnung 5 (sowie mit weiteren später noch kurz erläuterten Bestandteilen) eine sog. Befüll-Entlüftungseinrichtung 4 bildet.

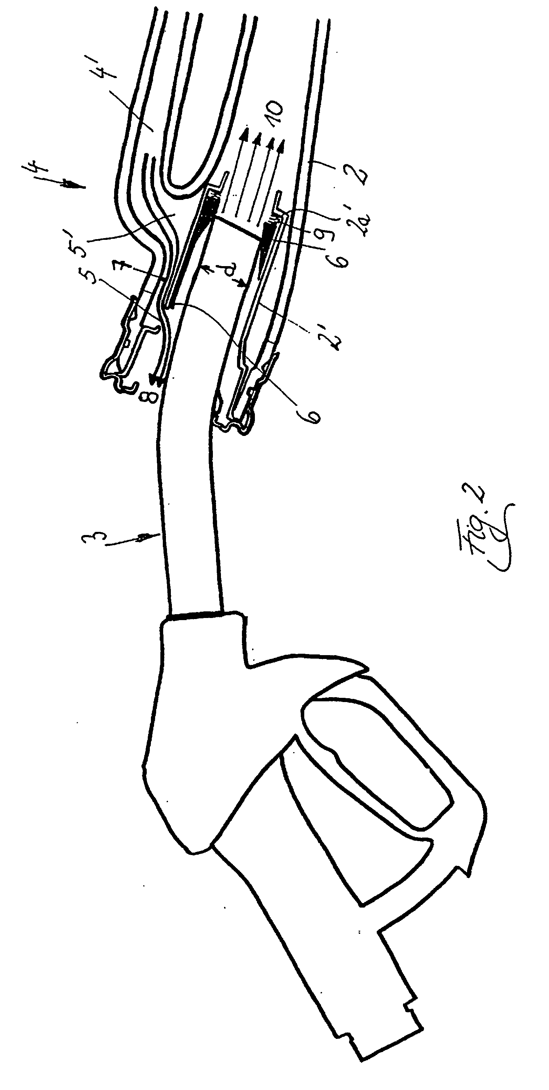

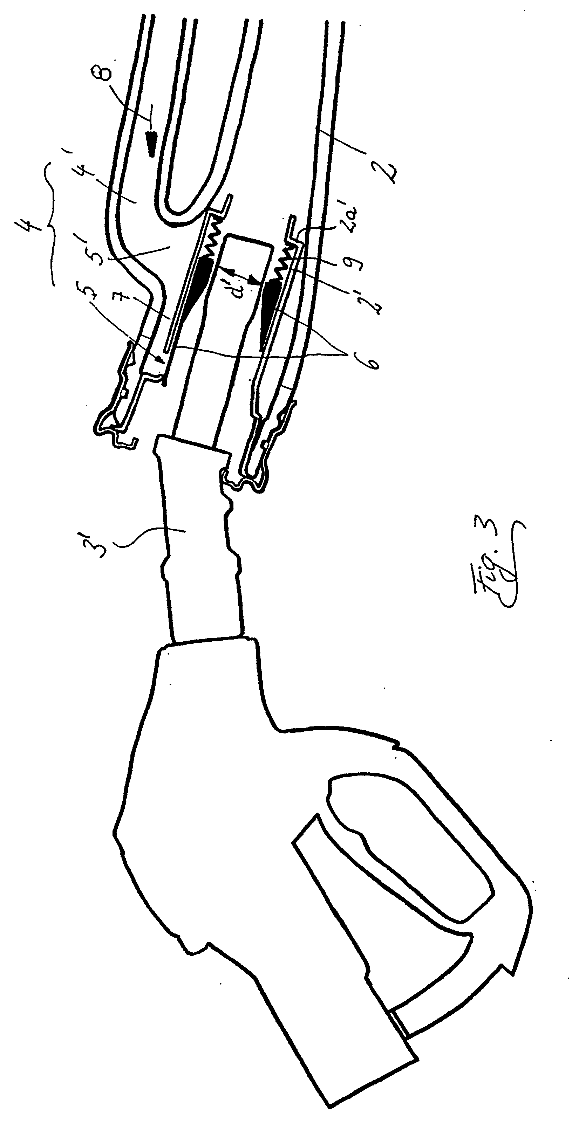

Das Kraftfahrzeug, in welchem sich der dargestellte Kraftstofftank 1 befindet, wird von einer Diesel-Brennkraftmaschine angetrieben, weshalb in den Kraftstofftank 1 grundsätzlich Diesel-Kraftstoff eingefüllt werden sollte. Bekanntermaßen besitzen Tank-Zapfpistolen für Dieselkraftstoff, von denen in den **Figuren 1, 2** eine unter der Bezugsziffer 3 dargestellt ist, einen größeren Durchmesser d als Tank-Zapfpistolen für bleifreien Otto-Kraftstoff (Bleifrei-Benzin), von denen unter der Bezugsziffer 3' eine in **Figur 3** dargestellt ist (vgl. deren kleineren Durchmesser d').

Um zu verhindern, dass der Kraftstofftank 1 versehentlich mit Bleifrei-Benzin aus einer Tank-Zapfpistole 3' befüllt wird, ist nun im Einfüllstutzen 2 ein mit der Bezugsziffer 6 versehenes Element vorgesehen, das auf das Einführen der Tank-Zapfpistole 3 mit dem besagten größeren Durchmesser d (nämlich insbesondere einer Diesel-Zapfpistole) anspricht und daraufhin ein Befüllen des Kraftstofftanks 1 zulässt, während bei Einführen einer Tank-Zapfpistole 3' mit einem kleineren Durchmesser d' (nämlich insbesondere einer Zapfpistole für bleifreies Benzin) in den Einfüllstutzen 2 ein Befüllen des Kraftstofftanks 1 verhindert wird. Wie am besten der **Figur 2** entnehmbar ist, ist dieses Element 6 in Form eines endseitig abgeschrägten im wesentlichen hohlzylindrischen Schieber-Elementes ausgeführt und in Längsrichtung des Einfüllstutzens 2 bzw. in Einführrichtung der Zapfpistole 3 - diese ist gleichgerichtet den Pfeilen 10, welche den in den Tankinnenraum einströmenden Kraftstoff verdeutlichen - verschiebbar. Entsprechend geführt ist dieses Element 6 außenseitig durch eine im Einfüllstutzen 2 angeordnete Führungshülse 2', die am freien Ende des Einfüllstutzens 2 direkt an diesem anliegt.

Stromab dieses genannten endseitigen Anlagebereiches der Führungshülse 2' am Einfüllstutzen 2 ist die Führungshülse 2' über einen Ringspalt 7 von der Innenwand des Einfüllstutzens 2 beabstandet. Über diesen Ringspalt 7 steht nun eine Mündungsöffnung 5' der Befüll-Entlüftungsleitung 4' im Einfüllstutzen 2 mit der/einer in der Wand der Führungshülse 2' vorgesehenen Mündungsöffnung 5 in Verbindung. Gase, die über die Befüll-Entlüftungsleitung 4' aus dem Kraftstofftank 1 abgeführt werden, können somit über die Mündungsöffnung 5', den Ringspalt 7 sowie die Mündungsöffnung 5 gemäß den Pfeilen 8 letztlich in den mit der Umgebung in Verbindung stehenden Teil des Einfüllstutzens 2, nämlich den Innenraum der Führungshülse 2', gelangen und somit in die Umgebung abgeführt werden. Die Befüll-Entlüftungsleitung 4' bildet somit zusammen mit den beiden Mündungsöffnung 5, 5' sowie einem Abschnitt des Ringspaltes 7 die bereits genannte Befüll-Entlüftungseinrichtung 4.

Über diese Befüll-Entlüftungseinrichtung 4 können die Gase (Pfeile 8) aus dem Innenraum des Kraftstofftanks 1 jedoch nur dann in die Umgebung abgeführt werden, wenn die Mündungsöffnung 5 freigegeben ist (und selbstverständlich auch nur dann, wenn ein nicht dargestellter üblicher Tankdeckel vom freien Ende des Einfüllstutzens 2 abgenommen wurde). Die Mündungsöffnung 5 der Befüll-Entlüftungseinrichtung 4 kann nämlich - wie ein Vergleich der **Figuren 2 und 3** zeigt - durch das besagte hohlzylindrische Element 6 verschlossen oder freigegeben werden. In der die Mündungsöffnung 5 verschließenden Position gehalten wird das Element 6 dabei durch eine Schrauben-Druckfeder 9, die zwischen dem dem Kraftstofftank 1 zugewandten Ende des Elementes 6 und einem geeigneten Absatz 2a' der Führungshülse 2' eingespannt ist.

Der Innendurchmesser des hohlzylindrischen Elementes 6 verringert sich in Richtung zum Kraftstofftanks 1 hin, d.h. in Richtung der Pfeile 10, die den aus der Zapfpistole 2 in den Tankinnenraum einströmenden Kraftstoff verdeutlichen. Der engste lichte Querschnitt des hohlzylindrischen Elementes 6 ist dabei derart dimensioniert, dass eine übliche Zapfpistole 3' für bleifreien Kraftstoff durch diesen engsten Querschnitt hindurchgeführt werden kann, so wie dies in **Fig.3** dargestellt ist. Wird also eine derartige Zapfpistole 3' für bleifreien Kraftstoff in den erfindungsgemäßen Einfüllstutzen 2 eingeführt, so verbleibt das besagte Element 6 in seiner die Mündungsöffnung 5 der Befüll-Entlüftungseinrichtung 4 verschließenden Position, in welcher es - wie bereits erläutert wurde - grundsätzlich durch die Schraubendruckfeder 9 (bzw. ein anderes geeignetes Kraftspeicherelement) gehalten wird.

Wird hingegen eine übliche Tank-Zapfpistole 3 für Diesel-Kraftstoff in den Einfüllstuten 2 eingeführt, so wie die in **Figur 2** dargestellt ist, so stößt diese aufgrund ihres größeren Durchmessers d an der Innenwand des besagten Elementes 6 an, wodurch dieses bei weiterem Einführen der Tank-Zapfpistole 3 (bis zur üblichen Tiefe) in Einführrichtung (diese ist gleich der Pfeilrichtung 10) und somit gegen die Kraft der Schraubendruckfeder 9 verschoben wird. Durch diese geschilderte Verschiebebewegung des als Schieber ausgebildeten bzw. als solcher fungierenden Elementes 6 wird - wie ersichtlich - die Mündungsöffnung 5 freigelegt, so dass die (zunächst wie erläutert verschlossene) Befüll-Entlüftungseinrichtung 4 hierdurch geöffnet wird.

Wie vor der Beschreibung dieses Ausführungsbeispieles bereits ausführlich erläutert wurde, kann nur dann eine nennenswerte Menge von Kraftstoff in den Kraftstofftank 1 eingefüllt werden, wenn die Befüll-Entlüftungseinrichtung 4 geöffnet ist. Andernfalls verursachen nämlich die sich im Innenraum des Kraftstofftanks aufstauenden Gase einen Druckaufbau im Gesamtsystem, wonach aufgrund des dem einströmenden Kraftstoff 10 entgegengerichteten Gegendruckes die (bekannte und übliche) Abschaltautomatik an der Tank-Zapfpistole 3 aktiviert wird. Bei verschlossen bleibender Mündungsöffnung 5 der Befüll-Entlüftungseinrichtung 4 - so wie dies in **Fig.3** dargestellt ist - kann somit praktisch nur eine vernachlässigbar geringe Menge von "falschem" Kraftstoff in den Kraftstofftank 1 eingefüllt werden.

Unter Bezugnahme insbesondere auf **Fig.3** sei noch darauf hingewiesen, dass es sich empfiehlt, bevorzugt den freien Endabschnitt des Einfüllstutzens 2 derart zu gestalten, dass ein stärkeres Verkanten der Zapfpistole 3 bzw 3' im Einfüllstutzen 2 nicht ermöglicht wird, da andernfalls auch durch eine Zapfpistole 3' mit geringerem Durchmesser d' das besagte schieberartige Element 6 in seine die Befüll-Entlüftungseinrichtung 4 freigebende Position verschoben werden könnte, jedoch können ohnehin eine Vielzahl von Details insbesondere konstruktiver Art durchaus abweichend vom gezeigten Ausführungsbeispiel gestaltet sein; ohne den Inhalt der Patentansprüche zu verlassen.

## Patentansprüche

1. Kraftfahrzeug-Kraftatofftank mit einem Einfüllstutzen (2), der hinsichtlich seiner Abmessung zur Aufnahme einer einen größeren Durchmesser (d) aufweisenden Tank-Zapfpistole (3), insbesondere einer Zapfpistole für Dieselkraftstoff, vorgesehen ist, mit einem am Einfüllstutzen (2) vorgesehenen Element (6), welches auf das Einführen einer Tank-Zapfpistole (3) mit dem besagten größeren Durchmesser (d) anspricht und daraufhin ein Befüllen des Kraftstofftanks (1) zulässt, während bei Einführen einer Tank-Zapfpistole (3') mit einem kleineren Durchmesser (d') in den Einfüllstutzen (2) ein Befüllen des Kraftstofftanks (1) verhindert wird,
**dadurch gekennzeichnet, dass** am Kraftstofftank (1), der mit einer Befüll-Entlüftungseinrichtung (4) in Form einer größtenteils getrennt vom Einfüllstutzen (2) verlaufenden Entlüftungsleitung (4') ausgebildet ist, das Befüllen des Kraftstofftanks (1) bei Einführen einer Tank-Zapfpistole (3') mit einem kleineren Durchmesser (d') dadurch verhindert wird, dass dann die Entlüftungsleitung (4') des Kraftstofftanks (1) verschlossen ist.

2. Kraftfahrzeug-Kraftstofftank nach Anspruch 1,
**dadurch gekennzeichnet, dass** das besagte, am Einfüllstutzen (2) vorgesehene Element (6) bei Einführen einer Tank-Zapfpistole (3) mit dem besagten größeren Durchmesser (d) in den Einfüllstutzen (2) von einer eine Mündungsöffnung (5, 5') der Entlüftungsleitung (4') in den Einfüllstutzen (2) verschließenden Position in eine diese Mündungsöffnung (5, 5') freigebende Position bewegt wird.

3. Kraftfahrzeug-Kraftstofftank nach Anspruch 2,
**dadurch gekennzeichnet, dass** das besagte Element (6) hohlzylindrisch ausgebildet und gegen Federkraft im Einfüllstutzen (2) längsverschiebbar geführt ist.

## Claims

1. Vehicle fuel tank with an inlet (2) which, with regard to its dimensions, is provided for receiving a pump nozzle (3) of relatively large diameter (d), especially a pump nozzle for diesel fuel, having an element (6) provided at the inlet (2) which responds to the introduction of a pump nozzle (3) of the aforementioned large diameter (d) and then allows filling of the fuel tank (1), whereas on introduction of a pump nozzle (3') of smaller diameter (d') into the inlet (2), filling of the fuel tank (1) is prevented, **characterised in that** at the fuel tank (1), which is designed with a filling ventilation device (4) in the form of a filling ventilation duct (4') extending substantially separately from the inlet (2), the filling of the fuel tank (1) on introduction of a pump nozzle (3') of smaller diameter (d') is thereby prevented **in that**, **in that** event, the filling ventilation duct (4') of the fuel tank (1) is closed.

2. Vehicle fuel tank according to Claim 1, **characterised in that** the element (6) provided at the inlet (2) is moved, on introduction of a pump nozzle (3) of said larger diameter (d) into the inlet (2), from a position closing an outlet opening (5, 5') of the ventilation duct (4') into the inlet (2), into a position freeing this outlet opening (5, 5').

3. Vehicle fuel tank according to Claim 2, **characterised in that** said element (6) is designed as a hollow cylinder and is guided longitudinally displaceable in the inlet (2) against a spring force.

## Revendications

1. Réservoir de carburant pour véhicule avec un ajutage de remplissage (2), dont les dimensions sont prévues pour recevoir un pistolet distributeur (3) présentant un plus grand diamètre (d), en particulier un pistolet distributeur pour du gazole, avec un élément (6) prévu sur l'ajutage de remplissage (2) et qui réagit à l'introduction d'un pistolet distributeur pour réservoir (3) ayant le diamètre (d) plus grand puis permet un remplissage du réservoir de carburant (1), tandis qu'un remplissage du réservoir de carburant (1) est rendu impossible lorsqu'on introduit dans l'ajutage de remplissage (2) un pistolet distributeur (3') ayant un plus petit diamètre (d'),
**caractérisé en ce que**
sur le réservoir de carburant (1) formé avec une installation de ventilation pour remplissage (4) sous forme d'une conduite de ventilation (4') qui s'étend en étant en grande partie séparée de l'ajutage de remplissage (2), le remplissage du réservoir de carburant (1) est rendu impossible du fait que la conduite de ventilation (4') du réservoir de carburant (1) est alors fermée lorsqu'on introduit un pistolet distributeur (3') ayant un plus petit diamètre (d').

2. Réservoir de carburant pour véhicule selon la revendication 1,
**caractérisé en ce que**
lorsqu'on introduit dans l'ajutage de remplissage (2) un pistolet distributeur (3) ayant le diamètre (d) plus grand, l'élément (6) prévu sur l'ajutage de remplissage (2) est déplacé d'une position qui ferme une ouverture de l'orifice (5, 5') de la conduite de ventilation (4') dans l'ajutage de remplissage (2) à une position qui libère cette ouverture de l'orifice (5, 5').

3. Réservoir de carburant pour véhicule selon la revendication 2,
**caractérisé en ce que**
l'élément (6) est formé de façon cylindrique creuse et est guidé dans l'ajutage de remplissage (2) de façon à pouvoir se déplacer longitudinalement en s'opposant à une force élastique.
